(19) Europäisches Patentamt
European Patent Office
Office européen des brevets

(11) Publication number: 0 185 053 B1

(12) **EUROPEAN PATENT SPECIFICATION**

(45) Date of publication of patent specification: **06.02.91**

(51) Int. Cl.[5]: **C 08 L 63/02,** C 08 G 65/08

(21) Application number: **85902846.6**

(22) Date of filing: **20.05.85**

(86) International application number: **PCT/US85/00937**

(87) International publication number: **WO 85/05371 05.12.85 Gazette 85/26**

# (54) ADVANCED EPOXY RESINS HAVING IMPROVED IMPACT RESISTANCE WHEN CURED AND COATING COMPOSITIONS PREPARED THEREFROM.

(30) Priority: **21.05.84 US 612287**

(43) Date of publication of application: **25.06.86 Bulletin 86/26**

(45) Publication of the grant of the patent: **06.02.91 Bulletin 91/06**

(84) Designated Contracting States: **BE DE FR GB IT NL SE**

(56) References cited:
EP-A-0 077 758
WO-A-83/04414
FR-A-2 149 431
GB-A-1 155 890
JP-A-0 042 298
US-A-3 016 362
US-A-3 240 376
US-A-3 725 341
US-A-3 931 109
US-A-4 314 917
US-A-4 342 673
US-A-4 465 722

(73) Proprietor: **THE DOW CHEMICAL COMPANY**
**2030 Dow Center Abbott Road P.O. Box 1967**
**Midland Michigan 48640-1967 (US)**

(72) Inventor: **CAVITT, Michael, B.**
**303 South Yaupon**
**Lake Jackson, TX 77566 (US)**
Inventor: **WASSBERG, Neal, L.**
**420 Garland Drive, No. 1301**
**Lake Jackson, TX 77566 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 185 053 B1

**Description**

The present invention pertains to advanced epoxy resins and high solids coatings prepared therefrom.

In the manufacture of automobiles, it is desirable to provide the metal with a protective coating that is chip resistant. The present invention provides an epoxy resin which can be formulated into a coating composition which provides excellent chip resistance to the substrate and improved chemical resistance.

One aspect of the present invention pertains to an advanced epoxy resin composition comprising the product resulting from reacting (A) a mixture containing (1) at least one polyglycidyl ether of a material having at least two aliphatic hydroxyl groups per molecule, (2) at least one epoxy resin having an average of from 2.6 to 6, preferably from 3 to 4 glycidyl ether groups per molecule attached to one or more aromatic rings and optionally (3) one or more glycidyl ethers of a dihydric phenol; with (B) at least one dihydric phenol in the presence of a suitable quantity of a suitable catalyst; and wherein components (A) and (B) are present in quantities which provide an epoxy to phenolic hydroxyl ratio of from 1.4:1 to 4:1, preferably from 1.8:1 to 2.5:1, with the proviso that all calculations are on the basis that there are no substituent groups other than hydrogen, hydroxyl or glycidyl ether groups attached to any aromatic rings of any of the components even when such groups are actually present and wherein the number of epoxy equivalents contributed by component (A—3) to the number of epoxy equivalents contributed by component (A—2) to the number of epoxy equivalents contributed by component (A—1) is from 0:0.05:1 to 0.3:0.6:1, preferably from 0:0.08:1 to 0.15:0.56:1, most preferably from 0:0.1:1 to 0.1:0.45:1.

The quantity of component (A—2) which can be employed herein without forming a gel depends upon its functionality. The greater the functionality, the lesser the quantity that can be employed without forming a gel. Experiments with small quantities of components at a desired ratio of components (A—1) and (A—2) can be easily conducted to determine if that particular ratio will form a gel. If it does, the ratio can be changed and other small scale experiments can be conducted until a ratio which does not form a gel is determined.

Usually, when component (A—2) has an average epoxide functionality of from 2.6 to 3, the ratio of epoxy equivalents contributed by component (A—3) to epoxy equivalents contributed by component (A—2) to epoxy equivalents contributed by component (A—1) is from 0:0.2:1 to 0.3:0.45:1, preferably from 0:0.3:1 to 0.15:0.56:1, most preferably from 0:0.4:1 to 0.1:0.58:1 and the ratio of total epoxy equivalents contributed by component (A) to phenolic hydroxyl equivalents contributed by component (B) is from 1.4:1 to 4:1, preferably from 1.59:1 to 3:1, most preferably from 1.9:1 to 2.5:1.

Usually, when component (A—2) has an average epoxide functionality of from >3 to 3.6, the ratio of epoxy equivalents contributed by component (A—3) to epoxy equivalents contributed by component (A—2) to epoxy equivalents contributed by component (A—1) is from 0:0.12:1 to 0.3:0.31:1, preferably from 0:0.2:1 to 0.15:0.41:1, most preferably from 0:0.3:1 to 0.1:0.43:1 and the ratio of total epoxy equivalents contributed by component (A) to phenolic hydroxyl equivalents contributed by component (B) is from 1.4:1 to 4:1, preferably from 1.59:1 to 3:1, most preferably from 1.9:1 to 2.5:1.

Usually, when component (A—2) has an average epoxide functionality of from >3.6 to 6, the ratio of epoxy equivalents contributed by component (A—3) to epoxy equivalents contributed by component (A—2) to epoxy equivalents contributed by component (A—1) is from 0:0.05:1 to 0.3:0.1:1, preferably from 0:0.08:1 to 0.15:0.12:1, most preferably from 0:0.1:1 to 0.1:0.13:1 and the ratio of total epoxy equivalents contributed by component (A) to phenolic hydroxyl equivalents contributed by component (B) is from 1.4:1 to 5:1, preferably from 1.59:1 to 4:1, most preferably from 1.9:1 to 3:1.

By the term polyglycidyl ether, it means that the material contains an average of more than one glycidyl ether group per molecule.

Another aspect of the present invention pertains to coating compositions comprising the aforementioned advanced epoxy resins and a curing quantity of one or more curing agents therefor.

Suitable glycidyl ethers of a material having at least two aliphatic hydroxyl groups include, for example, the glycidyl ethers of ethylene glycol, propylene glycol, dipropylene glycol, tripropylene glycol, 1,4-butanediol, 1,6-hexanediol, polyoxypropylene glycol, polyoxyethylene glycol, polyoxybutylene glycol, glycerine, 1,2,3-trihydroxybutane, 1,2,4-trihydroxybutane, trimethylolpropane, diglycidyl ether of hydrogenated bisphenol A, diglycidyl ether of cyclohexane dimethanol, and mixtures thereof.

Suitable epoxy resins having an average of from 2.6 to 6 glycidyl ether groups attached to an aromatic ring include those represented by the formulas

FORMULA I

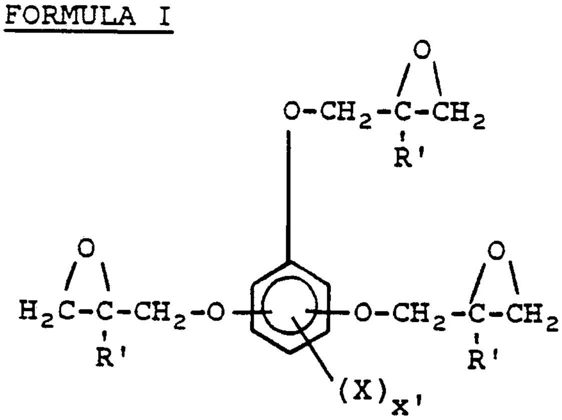

FORMULA II

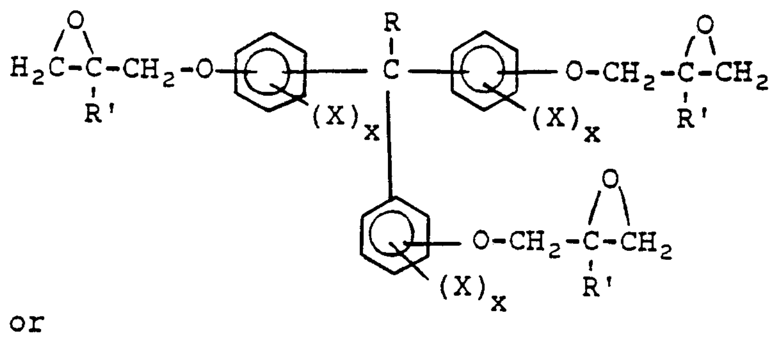

or

FORMULA III

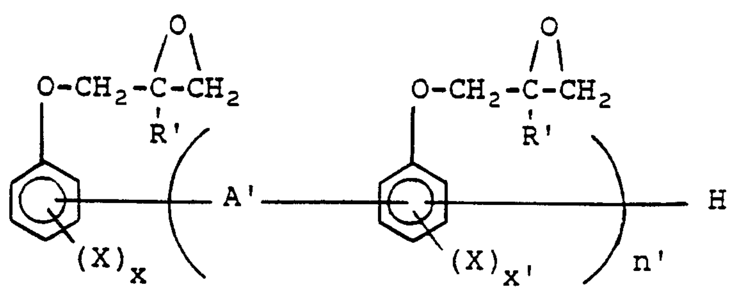

wherein each A′ is independently a divalent hydrocarbyl group having from 1 to 10 carbon atoms; R is hydrogen or a hydrocarbyl group having from 1 to 10 carbon atoms; each R′ is independently hydrogen or a hydrocarbyl group having from 1 to 4 carbon atoms; each X is independently hydrogen, a monovalent hydrocarbyl group having from 1 to 10 carbon atoms or a halogen; n′ has a value of from 1.6 to 5, preferably from 2 to 3; x has a value of 4 and x′ has a value of 3.

Suitable glycidyl ethers of a dihydric phenol which can be employed herein include those represented by the formulas

FORMULA IV

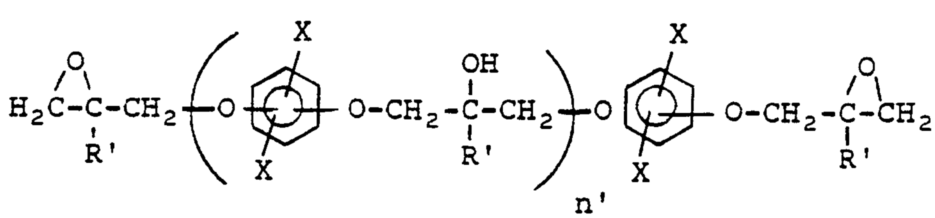

FORMULA V

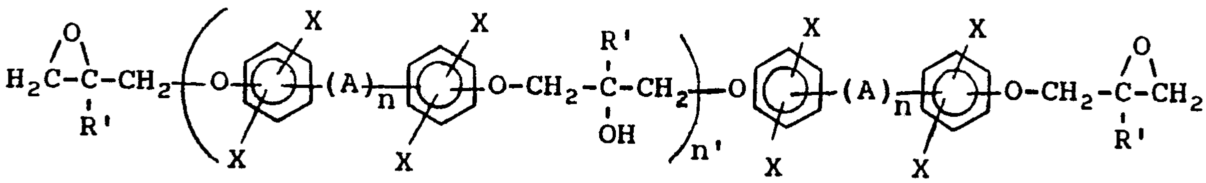

wherein each A is independently a divalent hydrocarbyl group having from 1 to 10 carbon atoms, —O—,

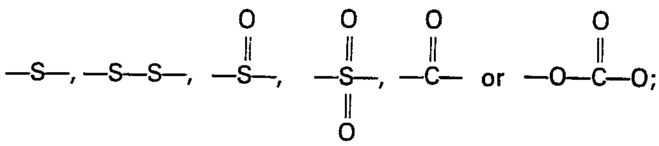

each X is independently hydrogen, a monovalent hydrocarbyl group having from 1 to 10 carbon atoms or a halogen; and n has a value of zero or 1; and n′ has a value from zero to 1, preferably from zero to 0.5.

Suitable materials having two hydroxyl groups attached to an aromatic ring which can be employed herein include those represented by the formula

FORMULA VI

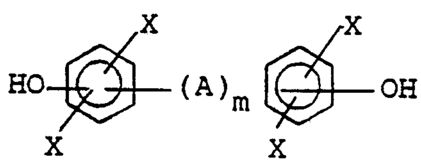

or

FORMULA VII

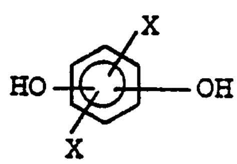

wherein A is a divalent hydrocarbyl group having from 1 to 10 carbon atoms, —O—, —S—, —S—S—,

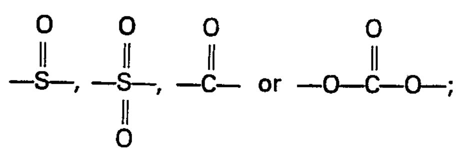

each X is independently hydrogen, a monovalent hydrocarbyl group having from 1 to 10 carbon atoms or a halogen; and m has a value of zero or 1.

Suitable catalysts which can be employed herein to influence the reaction between the epoxy group and the phenolic hydroxyl group include, for example, ammonium compounds, phosphonium compounds, tertiary amines, and mixtures thereof.

Suitable tertiary amines include, for example, diethylenetriamine, N-methylmorpholine, triethylamine, tributylamine, benzyldimethylamine, tris(dimethylaminomethyl)phenol, and mixtures thereof.

Suitable phosphonium compounds include, for example, those disclosed by Dante et al in U.S. 3,477,990, Perry in Canadian Patent 893,191 and U.S. 3,948,855 and by Tyler, Jr. et al in U.S. 4,366,295.

Suitable ammonium compounds include, for example, benzyl trimethyl ammonium chloride, benzyl trimethyl ammonium hydroxide, tetrabutyl ammonium chloride, tetramethyl ammonium hydroxide, tetrabutyl ammonium hydroxide, and mixtures thereof.

The quantity of catalyst varies depending upon the conditions employed, but is usually from 0.0003 to 0.001, preferably from 0.0005 to 0.0008 moles of total catalyst per epoxide equivalent.

The temperature at which the epoxy component and the phenolic hydroxyl-containing component are reacted is usually from 100°C to 210°C, preferably from 160°C to 200°C.

Suitable curing agents include, for example, polyisocyanates, polyisothiocyanates, blocked isocyanates, blocked isothiocyanates, mixtures thereof as well as mixtures with guanidines.

Suitable polyisocyanates include, for example, 2,4-toluenediisocyanate, 2,6-toluenediisocyanate, 4,4′-methylene diphenylisocyanate, hexamethylenediisocyanate, polymethylenepolyphenylisocyanate, biuret derivatives thereof, cyclic trimers and cocyclic trimers thereof, and mixtures thereof.

Suitable polyisothiocyanates include the thio derivatives of the aforementioned polyisocyanates.

Suitable blocked isocyanates and blocked isothiocyanates include, for example, the aforementioned polyisocyanates and polyisothiocyanates blocked with a suitable blocking agent such as a phenol, lactam, oxime, and mixtures thereof. Particularly suitable blocking agents include, for example phenol, 4-chlorophenol, o-sec-butylphenol, caprolactam, acetaldehydeoxime, methylethylketoxime, and mixtures thereof.

Suitable guanidines include, those represented by the formula

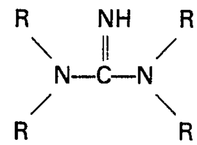

wherein each R is independently hydrogen or an alkyl group having from 1 to 4 carbon atoms, cyano or the group

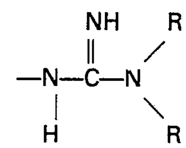

wherein R is as defined above.

Particularly suitable guanidines include, for example, guanidine, methylguanidine, dimethylguanidine, trimethylguanidine, tetramethylguanidine, methylisobiguanidine, dimethylisobiguanidine, trimethylisobiguanidine, tetramethylisobiguanidine, pentamethylisobiguanidine, hexamethylisobiguanidine, heptamethylisobiguanidine and cyanoguanidine.

The guanidine curing agent, when employed, is employed in quantities which provide an equivalent ratio of blocked isocyanate:guanidine:epoxy resin of from 0.4:0.6:1 to 0.6:0.4:1.

The mixture of the advanced epoxy resin and the curing agent(s) is usually cured at temperatures of from 120°C to 185°C, preferably from 135°C to 165°C.

Suitable solvents which can be employed herein include, for example, ketones such as, for example, methyl isobutyl ketone, and 2-heptanone; glycol ethers such as, for example, butylene glycol, methyl ether, diethylene glycol n-butyl ether, diethylene glycol ethyl ether, diethylene glycol methyl ether, dipropylene glycol methyl ether, ethylene glycol n-butyl ether, ethylene glycol methyl ether, ethylene glycol phenyl ether, propylene glycol methyl ether, tripropylene glycol methyl ether; glycol esters such as, for example, ethylene glycol monoethyl ether acetate, ethylene glycol monobutyl ether acetate, ethylene glycol monomethyl ether acetate, propylene glycol and monomethyl ether acetate; alcohols such as, for example, propanol, butanol, and pentanol; and aromatic hydrocarbons such as, for example, toluene, xylene, and mixtures thereof.

The quantity of solvent which is employed is that quantity which is necessary to provide a suitable application viscosity.

The compositions of the present invention can also be mixed and/or cured in the presence of fillers, pigments, dyes, leveling agents, flow control agents, accelerators, fire retardant agents, modifiers, and mixtures thereof.

The compositions of the present invention can be employed in castings, coatings, moldings, adhesives, encapsulation, filament winding, flooring, structural laminates, and electrical laminates.

The compositions of the present invention are particularly useful in the chip resistant coating employed in coating automobiles wherein the substrate, such as the automobile, is first coated with a corrosion resistant coating, next a chip resistant coating, next, optionally, a primer-surfacer coating and last a top coating.

The following examples are illustrative of the invention, but are not to be construed as to limiting the scope thereof in any manner.

The following components were employed in the example.

CATALYST A was a 70 weight percent solution of ethyl triphenyl phosphonium acetate·acetic acid complex in methanol.

EPOXY RESIN A was a diglycidyl ether of dipropylene glycol having an average epoxide equivalent weight (EEW) of 194.

EPOXY RESIN B was a diglycidyl ether of dipropylene glycol having an average EEW of 192.5.

EPOXY RESIN C was a phenol-formaldehyde novolac epoxy resin having an average epoxide functionality of 3.6 and an average EEW of 181.9.

EPOXY RESIN D was a phenol-formaldehyde novolac epoxy resin having an average epoxide functionality of 3.6 and an average EEW of 176.

EPOXY RESIN E was a diglycidyl ether of bisphenol A having an average EEW of 187.5.

EPOXY RESIN F was a phenol-formaldehyde novolac epoxy resin having an average epoxide functionality of 2.2 and an average EEW of 176.9.

EPOXY RESIN G was a triglycidyl ether of trisphenol methane having an average EEW of 160.4.

EPOXY RESIN H was a phenol-formaldehyde novolac epoxy resin having an average epoxide functionality of 5.5 and an average EEW of 188.6.

EPOXY RESIN I was a phenol-formaldehyde novolac epoxy resin made by mixing 171.2 g of Epoxy Resin F with 28.8 g of Epoxy Resin D to give an average epoxide functionality of 2.4 and an average EEW of 176.8.

EPOXY RESIN J was a phenol-formaldehyde novolac epoxy resin made by mixing 164.2 g of Epoxy Resin F with 65.8 g of Epoxy Resin D to give an average epoxide functionality of 2.6 and an average EEW of 176.7.

EPOXY RESIN K was a phenol-formaldehyde novolac epoxy resin made by mixing 114.0 g of Epoxy Resin F with 86.0 g of Epoxy Resin D to give an average epoxide functionality of 2.8 and an average EEW of 176.5.

EPOXY RESIN L was a diglycidyl ether of dipropylene glycol having an average EEW of 191.

EPOXY RESIN M was a phenol-formaldehyde novolac epoxy resin having an average epoxy functionality of 3.6 and an average EEW of 180.

CURING AGENT A was a methyl ethyl ketoxime blocked polyisocyanate commercially available from Mobay Chemical Corporation as Desmodur KL5-2540.

COATING FORMULATION FILLER was prepared by dry mixing 300 g of ASP-400 clay, 100 g of $TiO_2$, 100 g of Barytes (from Pfizer), 15 g of red iron oxide and 1 g of National red from Sun Chemical.

COATING FORMULATION A was prepared by mixing 1 part epoxy resin solution, 1.06 parts Curing Agent A, 0.16 parts of a 20% solids solution of a dibutyltin dilaurate catalyst in 2-heptanone, 1.6 parts of Coating Formulation Filler and enough butanol and 2-heptanone to obtain a sprayable viscosity but usually 0.3 parts n-butanol and 0.5 parts 2-heptanone. All parts were based on mass. The coating was cured at 149°C (300°F) for 15 minutes (900 s).

COATING FORMULATION B was prepared by mixing 1 part epoxy resin solution, 1.06 parts Curing Agent A, 0.16 parts of a 20% solids solution of dibutyltin dilaurate in n-butanol, 1.6 parts of Coating Formulation Filler and 0.75 parts of n-butanol. All parts were based on mass. The coating was cured at 149°C (300°F) for 15 minutes (900 s).

COATING FORMULATION C was prepared by mixing 1 part epoxy resin solution, 0.67 parts of dicyandiamide (5% N.V. in propylene glycol methyl ether), 0.032 part of 2-methylimidazole (10% N.V. in propylene glycol methyl ether), 0.5 part n-butanol and 0.85 part of Coating Formulation Filler. All parts were based on mass. The coating was cured at 149°C (300°F) for 15 minutes (900 s).

COATING FORMULATION D was prepared by mixing 1 part epoxy resin solution, 0.53 parts of Curing Agent A, 0.08 parts of a 20% solids solution of dibutyltin dilaurate catalyst, 0.34 parts of dicyandiamide (5% N.V. in propylene glycol methyl ether), 0.016 parts of 2-methylimidazole (10% N.V. in propylene glycol methyl ether), 0.5 parts of n-butanol and 1.3 parts of Coating Formulation Filler. All parts were based on mass. The coating was cured at 149°C (300°F) for 15 minutes (900 s).

COATING FORMULATION E was prepared by mixing 1 part by weight of epoxy resin solution, 1.06 parts Curing Agent A, 0.16 parts of a 20% solids solution of dibutyltin dilaurate in n-butanol and 0.37 parts of a n-butanol. All parts were based on mass. The coating formulations were applied to cold rolled steel panels with Bonderite® 40 treatment (20 ga.) and coated using a number 26 draw down rod. The panels were cured for 15 min. (900 s) at 149°C (300°F).

Stone Chip Resistant Test

Panels used for evaluation were 20 ga. cold rolled steel with Bonderite® 40 treatment. The panels were coated with four layers of paint as is typical of this performance evaluation test. The initial coating is a electrodepositable coating that is available from PPG Industries as UNI-PRIME® ED 3150. This coating was cured at 177°C (350°F) for 30 minutes (1800 s). The next coating, applied on top of the UNI-PRIME coating, was the Coating Formulation being tested which was cured as indicated. The third coating was a primer coating available from the Ford Motor Company, Industrial and Chemical Products Division as 6J119B. This coat was cured for 20 min. (1200 s) at 149°C (300°F). The fourth and last coating was an enamel top coat available from Ford Motor Company, Industrial and Chemical Products Division as 50J107AN and was white in color. This appearance coat was baked at 135°C (275°F) for 15 minutes (900 s).

Evaluation of the above test panels was accomplished by measuring the stone chip resistance. This test method is described in Society of Automotive Engineers (SAE) Test Method J400.

Mek Double Rubs

To the ball end of a 10.9 kg (2 lb.) ball pein hammer was attached a pad of choose cloth composed of 8 plys. The pad was saturated with methyl ethyl ketone (MEK) and then rubbed across a coated substrate. A constant back and forth motion is used allowing only the weight of the hammer to apply the force to the test panel. One double rub is equal to one back and forth movement. This movement is maintained until the film is marred and/or begins to be removed by the solvent.

Glacial Acetic Acid Spot Test

To a coated substrate (cold rolled steel) is applied glacial acetic acid (~2 ml) then covered with a 59 $cm^3$ (2 oz.) bottle. A timer is started when the acetic acid is applied and is continued until the coating delaminates. When delamination begins the timer is stopped.

Pencil Hardness

This procedure is described in *Paint Testing Manual* by H. A. Gardner and G. G. Sward in the 13th Edition (1972), pages 283 and 284. When the coating is broken to the metal surface, that constitutes a failure. The results reported here are a pencil hardness that does not break the film but the next harder pencil grade does break the film. The pencil hardness rating, going from poorest to best, are 6B, 5B, 4B, 3B, 2B, B, HB, F, H 2H, 3H, 4H, 5H and 6H. This test was run on 20 gauge (0.9525 mm) cold rolled steel panels with Bonderite® 40 treatment. The coating was applied on the bare metal surface using Coating Formulation B and cured as stated above.

Comparative Experiment A

To a 1-liter glass flask equipped with a stirrer, thermometer, condenser, a method for a nitrogen purge and an electrical heating mantel was charged, in order, with 385.6 g (2.003 epoxy equivalents) of Epoxy Resin B, 114.4 g (1.004 equiv.) of bisphenol A and then heated to 90°C whereupon 0.92 g (0.0016 mole) of Catalyst A was added. A nitrogen purge was maintained for the duration of the reaction. The reaction temperature was increased to 150°C, then heating stopped and the reaction mass exothermed to 184°C. This temperature was maintained until the reaction was completed, 1 hour (3600 s). The product was allowed to cool to 133°C whereupon the nitrogen purge was discontinued, and 125 g (1.095 mole) of 2-heptanone was added. The resultant product had a 511 EEW based on neat resin.

Example 1

To a 1-liter glass flask equipped with a stirrer, thermometer, condenser, a method for a nitrogen purge and an electrical heating mantel was charged, in order, with 325 g (1.675 epoxy equivalents) of Epoxy Resin A, 85 g (0.467 epoxy equivalents) of Epoxy Resin C and 125.9 g (1.104 equiv.) of bisphenol A and heated to 90°C whereupon 0.85 g (0.0014 mole) of Catalyst A was added. A nitrogen purge was maintained for the duration of the reaction. The reaction temperature was increased to 150°C, then heating stopped, and the reaction mass exothermed to 188°C. This temperature was maintained until the reaction was completed, 1.5 hours (5400 s). The product was allowed to cool to 140°C whereupon the nitrogen purge was discontinued, and 134 g (1.173 mole) of 2-heptanone was added. The resultant product had a 521 EEW based on neat resin, i.e. product without solvent.

Example 2

To a 1-liter glass flask equipped with a stirrer, thermometer, condenser, a method for a nitrogen purge and an electrical heating mantel was charged, in order, with 295 g (1.532 epoxy equivalents) of Epoxy Resin B, 115 g (0.632 epoxy equivalents) of Epoxy Resin C and 126.8 g (1.112 equiv.) of bisphenol A and heated to 90°C whereupon 0.85 g (0.0014 mole) of catalyst was added. A nitrogen purge was maintained for the duration of the reaction. The reaction temperature was increased to 150°C, then heating stopped, and the reaction mass exothermed to 178°C. This temperature was maintained until the reaction was completed, 1.5 hours (5400 s). The product was allowed to cool to 135°C whereupon the nitrogen purge was discontinued, and 135 g (1.182 mole) of 2-heptanone was added. The resultant product had a 526 EEW based on neat resin.

Example 3

To a 1-liter glass flask equipped with a stirrer, thermometer, condenser, a method for a nitrogen purge and an electrical heating mantel was charged, in order, with 301 g (1.564 epoxy equivalents) of Epoxy Resin B, 89 g (0.506 epoxy equivalents) of Epoxy Resin D and 151.6 g (1.33 equiv.) of bisphenol A and heated to 90°C whereupon 0.85 g (0.0014 mole) of Catalyst A was added. A nitrogen purge was maintained for the duration of the reaction. The reaction temperature was increased to 150°C, then heating stopped, and the reaction mass exothermed to 189°C. This temperature was maintained until the reaction was completed, about 1.1 hours (3960 s). The product was allowed to cool to 133°C whereupon the nitrogen purge was discontinued, and 230.4 g (2.017 mole) of 2-heptanone was added. The resultant product had a 786 EEW based on neat resin.

Comparative Experiment B

To a 1-liter glass flask equipped with a stirrer, thermometer, condenser, a method for a nitrogen purge and an electrical heating mantel was charged, in order, with 240 g (1.247 epoxy equivalents) of Epoxy Resin

B, 85 g (0.453 epoxy equivalents) of Epoxy Resin E and 85 g (0.483 epoxy equivalents) of Epoxy Resin D and 126.5 g (1.11 equiv.) of bisphenol A and heated to 90°C whereupon 0.85 g (0.0014 mole) of Catalyst A was added. A nitrogen purge was maintained for the duration of the reaction. The reaction temperature was increased to 150°C, then heating stopped, and the reaction mass exothermed to 182°C. This temperature was maintained until the reaction was completed, 1.25 hours (4500 s). The product was allowed to cool to about 136°C whereupon the nitrogen purge was discontinued, and 134.1 g (1.173 mole) of 2-heptanone was added. The resultant product had a 520 EEW based on neat resin.

Comparative Experiment C

A 1-liter flask equipped with a stirrer, thermometer, condenser, a method for a nitrogen purge and an electrical heating mantel was charged in order, with 295 g (1.532 epoxy equivalents) of epoxy resin B, 115 g (0.650 epoxy equivalent) of epoxy resin F and 128.4 g (1.126 equiv.) of bisphenol A and heated to 90°C whereupon 0.85 g (0.0014 mole) of catalyst was added. A nitrogen purge was maintained for the duration of the reaction. The reaction temperature was increased to 150°C, then heating stopped, and the reaction mass exothermed to 189°C. The temperature was maintained until the reaction was completed, 1 hour (3600 s). The product was cooled to 136°C whereupon the nitrogen purge was discontinued and 135 g (1.182 mole) of 2-heptanone was added. The resultant product had a 515 EEW based on neat resin.

Example 4

A 1-liter flask equipped with a stirrer, thermometer, condenser, a method for a nitrogen purge and an electrical heating mantel was charged in order, with 295 g (1.532 epoxy equivalents) of epoxy resin B, 115 g (0.717 epoxy equivalent) of epoxy resin G and 134.7 g (1.182 equiv.) of bisphenol A and heated to 90°C whereupon 0.85 g (0.0014 mole) of catalyst was added. A nitrogen purge was maintained for the duration of the reaction. The reaction temperature was increased to 150°C, then heating stopped, and the reaction mass exothermed to 184°C. The temperature was maintained until the reaction was completed, 1 hour (3600 s). The product was cooled to 134°C whereupon the nitrogen purge was discontinued and 136 g (1.191 mole) of 2-heptanone was added. The resultant product had a 524 EEW based on neat resin.

Example 5

A 1-liter flask equipped with a stirrer, thermometer, condenser, a method for a nitrogen purge and an electrical heating mantel was charged in order, with 335 g (1.740 epoxy equivalents) of Epoxy Resin B, 75 g (0.398 epoxy equivalent) of Epoxy Resin H and 124.3 g (1.09 equiv.) of bisphenol A and heated to 90°C whereupon 0.85 g (0.0014 mole) of catalyst was added. A nitrogen purge was maintained for the duration of the reaction. The reaction temperature was increased to 150°C, then heating stopped, and the reaction mass exothermed to 180°C. The temperature was maintained until the reaction was completed, about 1 hour (3600 s). The product was cooled to 134°C whereupon the nitrogen purge was discontinued and 133.6 g (1.170 mole) of 2-heptanone was added. The resultant product had a 524 EEW based on neat resin.

Comparative Experiment D

A 1-liter glass flask equipped with a stirrer, thermometer, condenser, a method for a nitrogen purge and an electrical heating mantel was charged in order, with 295 g (1.532 epoxy equivalents) of Epoxy Resin B, 115 g (0.650 epoxy equivalents) of Epoxy Resin I and 128.5 g (1.128 equiv.) of bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 180°C. This temperature was maintained until the reaction was completed, 1 hour (3600 s). The product was allowed to cool to 138°C whereupon the nitrogen purge was discontinued and 134.6 g (1.178 mole) of 2-heptanone was added. The resultant product had a 520 EEW based on neat resin.

Example 6

A 1-liter glass flask equipped with a stirrer, thermometer, condenser, a method for a nitrogen purge and an electrical heating mantel was charged in order, with 295 g (1.532 epoxy equivalents) of Epoxy Resin B, 115 g (0.651 epoxy equivalents) of Epoxy Resin J and 128.5 g (1.128 equiv.) of bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 184°C. This temperature was maintained until the reaction was completed, about 1 hour (3600 s). The product was allowed to cool to 133°C whereupon the nitrogen purge was discontinued and 134.6 g (1.178 mole) of 2-heptanone was added. The resultant product had a 526 EEW based on neat resin.

Example 7

A 1-liter glass flask equipped with a stirrer, thermometer, condenser, a method for a nitrogen purge and an electrical heating mantel was charged in order, with 295 g (1.532 epoxy equivalents) of Epoxy Resin B, 115 g (0.652 epoxy equivalents) of Epoxy Resin K and 128.5 g (1.128 equiv.) of bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 183°C. This temperature was maintained until the reaction was completed,

about 1 hour (3600 s). The product was allowed to cool to 136°C whereupon 134.6 g (1.178 mole) of 2-heptanone was added. The resultant product had a 524 EEW based on neat resin.

Example 8

A 1-liter glass flask equipped with a stirrer, thermometer, condenser, a method for a nitrogen purge and an electrical heating mantel was charged in order, with 265.5 g (1.379 epoxy equivalents) of Epoxy Resin B, 115 g (0.653 epoxy equivalents) of Epoxy Resin D, 29.5 g (0.157 epoxy equivalents) of Epoxy Resin E and 129.1 g (1.132 equiv.) of bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 184°C. This temperature was maintained until the reaction was completed, 1 hour (3600 s). The product was allowed to cool to about 137°C whereupon the nitrogen purge was discontinued and 134.8 g (1.180 mole) of 2-heptanone was added. The resultant product had a 523 EEW based on neat resin.

Example 9

A 1-liter glass flask equipped with a stirrer, thermometer, condenser, a method for a nitrogen purge and an electrical heating mantel was charged in order, with 236 g (1.226 epoxy equivalents) of Epoxy Resin B, 115 g (0.653 epoxy equivalents) of Epoxy Resin D, 59 g (0.315 epoxy equivalents) of Epoxy Resin E and 129.4 g (1.136 equiv.) of bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 185°C. This temperature was maintained until the reaction was completed, about 1 hour (3600 s). The product was allowed to cool to 137°C whereupon the nitrogen purge was discontinued and 134.8 g (1.180 mole) of 2-heptanone was added. The resultant product had a 519 EEW based on neat resin.

Comparative Experiment E

A 1-liter glass flask equipped with a stirrer, thermometer, condenser, a method for a nitrogen purge and an electrical heating mantel was charged in order, with 221.25 g (1.149 epoxy equivalent) of Epoxy Resin B, 115 g (0.653 epoxy equivalent) of Epoxy Resin D, 73.75 g (0.393 epoxy equivalent) of Epoxy Resin E and 129.4 g (1.136 equiv.) of bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 183°C. This temperature was maintained until the reaction was completed, about 1 hour (3600 s). The product was allowed to cool to 134°C whereupon the nitrogen purge was discontinued and 134.9 g (1.181 mole) of 2-heptanone was added. The resultant product had a 521 EEW based on neat resin.

The resins prepared in the above Examples and Comparative Experiments were formulated into coatings and tested for chip resistance. The results are given in the following Table I.

TABLE I

| SAMPLE NO. | EPOXY RESIN | FORMULATION | CHIP RATING |
|---|---|---|---|
| A | Comparative Experiment A | A | 6+ |
| B | Example 2 | A | 8+ |
| C | Comparative Experiment A | B | 7 |
| D | Comparative Experiment B | B | 6 |
| E | Example 2 | B | 8 |
| F | Comparative Experiment C | B | 6 |
| G | Example 4 | B | 8- |
| H | Example 5 | B | 8- |
| I | Comparative Experiment D | B | 6+ |
| J | Example 6 | B | 7+ |
| K | Example 7 | B | 8 |
| L | Example 8 | B | 8 |
| M | Example 9 | B | 8 |
| N | Comparative Experiment E | B | 6+ |
| O | Example 2 | C | 6 |
| P | Example 2 | D | 7+ |
| Q | Comparative Experiment A | C | 6 |
| R | Comparative Experiment A | D | 7 |

Example 10

A 0.5-liter glass flask equipped with a stirrer, thermometer, condenser, a method for a nitrogen purge and an electrical heating mantel was charged in order, with 228.8 g (1.166 epoxy equivalents) of Epoxy Resin L, 42 g (0.233 epoxy equivalent) of Epoxy Resin M and 97.7 g (0.857 equiv.) of bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 174°C. This temperature was maintained until the reaction was completed, about 1 hour (3600 s). The product was allowed to cool to 130°C whereupon 90.6 g (0.793 mole) of 2-heptanone was added. The resultant product had a 683 EEW based on neat resin.

Example 11

A 0.5-liter glass flask equipped with a stirrer, thermometer, condenser, a method for a nitrogen purge and an electrical heating mantel was charged in order, with 222.8 g (1.166 epoxy equivalents) of Epoxy Resin L, 42 g (0.233 epoxy equivalent) of Epoxy Resin M and 39.9 g (0.35 equiv.) of bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 153°C. This temperature was increased to 174°C and maintained until the reaction was completed, about 1 hour (3600 s). The product was allowed to cool to 132°C whereupon 76.2 g (0.667 mole) of 2-heptanone was added. The resultant product had a 299 EEW based on neat resin.

Example 12

A 0.5-liter glass flask equipped with a stirrer, thermometer, condenser, a method for a nitrogen purge and an electrical heating mantel was charged in order, with 204.28 g (1.069 epoxy equiv.) of Epoxy Resin L, 57.62 g (0.320 epoxy equiv.) of Epoxy Resin M and 114 g (1.0 equiv.) of Bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 172°C. This temperature was maintained until the reaction was completed, 1 hour (3600 s). The product was allowed to cool to about 130°C whereupon 94.0 g (0.823 mole) of 2-heptanone was added. The resultant product had a 956 EEW based on neat resin.

Example 13

A 0.5-liter glass flask equipped with a stirrer, thermometer, condenser, a method for a nitrogen purge and an electrical heating mantel was charged in order, with 203.1 g (1.063 epoxy equiv.) of Epoxy Resin L, 57.4 g (0.319 epoxy equiv.) of Epoxy Resin M and 39.4 g (0.346 equiv.) of Bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 174°C. The temperature was maintained until the reaction was completed, about 1 hour (3600 s). The product was allowed to cool to 132°C whereupon 74.9 g (0.656 mole) of 2-heptanone was added. The resultant product had a 290 EEW based on neat resin.

Comparative Experiment F

A 0.5-liter glass flask equipped with a stirrer, thermometer, condenser, a method for a nitrogen purge and an electrical heating mantel was charged in order, with 267.4 g (1.400 epoxy equiv.) of Epoxy Resin L and 114 g (1.00 equiv.) of Bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 177°C. The temperature was maintained until the reaction was completed, about 1 hour (3600 s). The product was allowed to cool to 142°C whereupon 95.4 g (0.84 mole) of 2-heptanone was added. The resultant product had a 966 EEW based on neat resin.

Comparative Experiment G

A 0.5-liter glass flask equipped with a stirrer, thermometer, condenser, a method for a nitrogen purge and an electrical heating mantel was charged in order, with 267.4 g (1.400 epoxy equiv.) of Epoxy Resin L and 39.9 g (0.350 equiv.) of Bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 173°C. The temperature was increased to 175°C and maintained until the reaction was completed, about 1 hour (3600 s). The product was allowed to cool to 140°C whereupon 76.8 g (0.672 mole) of 2-heptanone was added. The resultant product had a 298 EEW based on neat resin.

Comparative Experiment H

A 0.5-liter glass flask equipped with a stirrer, thermometer, condenser, a method for a nitrogen purge and an electrical heating mantel was charged in order, with 267.4 g (1.486 epoxy equiv.) of Epoxy Resin M and 42.3 g (0.371 equiv.) of Bisphenol A and heated to 90°C whereupon 0.84 g (0.0014 mole) of catalyst was added. A nitrogen purge was maintained for the duration of the reaction. The reaction temperature was increased to 150°C, then heating stopped and the reaction mass exothermed to 165°C whereupon the reaction mass gelled to a hard insoluble mass and the reaction terminated.

Each of the above Examples 10—13 and Comparative Experiments F and G were employed in coating formulations and tested for stone chip resistance, resistance to methyl ethyl ketone (MEK), glacial acetic acid and pencil hardness. The results are given in the following Tables II and III. The resin from Comparative Experiment H was not tested because it was a gel and therefore not useful.

TABLE 11

| SAMPLE NO. | EPOXY RESIN | FORMULATION | EPOXY TO HYDROXYL EQUIV. RATIO | ALIPHATIC EPOXY TO NOVOLAC EPOXY EQUIV. RATIO | STONE CHIP RATING | PENCIL HARDNESS |
|---|---|---|---|---|---|---|
| A | Comp. Expt. F | B | 1.4:1 | 1:0 | 7 | H |
| B | Comp. Expt. G | B | 4:1 | 1:0 | 7+ | F |
| C | Comp. Expt. H | Product was a gel and not tested | 4:1 | 0:1 | | |
| D | Example 10 | B | 1.4:1 | 1:0.2 | 7 | 4H |
| E | Example 11 | B | 4:1 | 1:0.2 | 7+ | 2H |
| F | Example 12 | B | 1.4:1 | 1:0.3 | 7- | 5H |
| G | Example 13 | B | 4:1 | 1:0.3 | 7- | 3H |

TABLE III

| SAMPLE NO. | EPOXY RESIN | FORMULATION | EPOXY TO HYDROXYL EQUIV. RATIO | ALIPHATIC EPOXY TO NOVOLAC EPOXY EQUIV. RATIO | MEK DOUBLE Rubs | GLACIAL ACETIC ACID SPOT TEST SECONDS |
|---|---|---|---|---|---|---|
| A | Comp. Expt. F | E | 1.4:1 | 1:0 | 63 | 924 |
| B | Comp. Expt. G | E | 4:1 | 1:0 | 33 | 720 |
| C | Comp. Expt. H | --- | 4:1 | 0:1 product was a gel and not tested | | |
| D | Example 10 | E | 1.4:1 | 1:0.2 | 103 | 1578 |
| E | Example 11 | E | 4:1 | 1:0.2 | 46 | 960 |
| F | Example 12 | E | 1.4:1 | 1:0.3 | 146 | 2598 |
| G | Example 13 | E | 4:1 | 1:0.3 | 45 | 1224 |

**Claims**

1. An advanced epoxy resin composition comprising a product resulting from reacting (A) a mixture containing (1) at least one polyglycidyl ether of a material having at least two aliphatic hydroxyl groups per molecule, (2) at least one epoxy resin having an average of from 2.6 to 6 glycidyl ether groups per molecule attached to one or more aromatic rings and optionally (3) one or more glycidyl ethers of a dihydric phenol; with (B) at least one dihydric phenol in the presence of a suitable quantity of a suitable catalyst; and wherein (i) components (A) and (B) are present in quantities which provide an epoxy to phenolic hydroxyl ratio of from 1.4:1 to 4:1, with the proviso that all calculations are on the basis that there are no substituent groups other than hydrogen, hydroxyl or glycidyl ether groups attached to any aromatic rings of any of the components even when such groups are actually present and (ii) wherein the number of epoxy equivalents contributed by component (A—3) to the number of epoxy equivalents contributed by component (A—2) to the number of epoxy equivalents contributed by component (A—1) is from 0:0.05:1 to 0.3:0.6:1.

2. An advanced epoxy resin composition of Claim 1 wherein

(i) when component (A—2) has an average epoxy functionality of from 2.6 to 3, the ratio of epoxy equivalents contributed by component (A—3) to epoxy equivalents contributed by component (A—2) to epoxy equivalents contributed by component (A—1) is from 0:0.2:1 to 0.3:0.45:1 and the ratio of total epoxy equivalents contributed by component (A) to phenolic hydroxyl equivalents contributed by component (B) is from 1.4:1 to 4:1;

(ii) when component (A—2) has an average epoxide functionality of from >3 to 3.6, the ratio of epoxy equivalents contributed by component (A—3) to epoxy equivalents contributed by component (A—2) to epoxy equivalents contributed by component (A—1) is from 0:0.12:1 to 0.3:0.31:1 and the ratio of total epoxy equivalents contributed by component (A) to phenolic hydroxyl equivalents contributed by component (B) is from 1.4:1 to 4:1; and

(iii) when component (A—2) has an average epoxide functionality of from >3.6 to 6, the ratio of epoxy equivalents contributed by component (A—3) to epoxy equivalents contributed by component (A—2) to epoxy equivalents contributed by component (A—1) is from 0:0.05:1 to 0.3:0.1:1 and the ratio of total epoxy equivalents contributed by component (A) to phenolic hydroxyl equivalents contributed by component (B) is from 1.4:1 to 5:1.

3. An advanced epoxy resin composition of Claim 1 wherein

(i) when component (A—2) has an average epoxide functionality of from 2.6 to 3, the ratio of epoxy equivalents contributed by component (A—3) to epoxy equivalents contributed by component (A—2) to epoxy equivalents contributed by component (A—1) is from 0:0.3:1 to 0.15:0.56:1 and the ratio of total epoxy equivalents contributed by component (A) to phenolic hydroxyl equivalents contributed by component (B) is from 1.59:1 to 3:1;

(ii) when component (A—2) has an average epoxy functionality of from >3 to 3.6, the ratio of epoxy equivalents contributed by component (A—3) to epoxy equivalents contributed by component (A—2) to epoxy equivalents contributed by component (A—1) is from 0:0.2:1 to 0.15:0.41:1 and the ratio of total epoxy equivalents contributed by component (A) to phenolic hydroxyl equivalents contributed by component (B) is from 1.59:1 to 3:1; and

(iii) when component (A—2) has an average epoxide functionality of from >3.6 to 6, the ratio of epoxy equivalents contributed by component (A—3) to epoxy equivalents contributed by component (A—2) to epoxy equivalents contributed by component (A—1) is from 0:0.08:1 to 0.15:0.12:1 and the ratio of total epoxy equivalents contributed by component (A) to phenolic hydroxyl equivalents contributed by component (B) is from 1.59:1 to 4:1.

4. An advanced epoxy resin composition of Claim 1 wherein

(i) when component (A—2) has an average epoxy functionality of from 2.6 to 3, the ratio of epoxy equivalents contributed by component (A—3) to epoxy equivalents contributed by component (A—2) to epoxy equivalents contributed by component (A—1) is from 0:0.4:1 to 0.1:0.58:1 and the ratio of total epoxy equivalents contributed by component (A) to phenolic hydroxyl equivalents contributed by component (B) is from 1.9:1 to 2.5:1;

(ii) when component (A—2) has an average epoxide functionality of from >3 to 3.6, the ratio of epoxy equivalents contributed by component (A—3) to epoxy equivalents contributed by component (A—2) to epoxy equivalents contributed by component (A—1) is from 0:0.3:1 to 0.1:0.43:1 and the ratio of total epoxy equivalents contributed by component (A) to phenolic hydroxyl equivalents contributed by component (B) is from 1.9:1 to 2.5:1; and

(iii) when component (A—2) has an average epoxide functionality of from >3.6 to 6, the ratio of epoxy equivalents contributed by component (A—3) to epoxy equivalents contributed by component (A—2) to epoxy equivalents contributed by component (A—1) is from 0:0.1:1 to 0.1:0.13:1 and the ratio of total epoxy equivalents contributed by component (A) to phenolic hydroxyl equivalents contributed by component (B) is from 1.9:1 to 3:1.

5. A coating composition comprising an advanced epoxy resin of Claim 1 and a curing quantity of one or more curing agents therefor.

6. The composition of Claim 5 wherein said curing agent is selected from one or more blocked polyisocyanates or mixtures of one or more blocked polyisocyanates and at least one guanidine material.

7. The composition of Claim 6 wherein said blocked polyisocyanates are selected from ketoxime blocked polyisocyanates.

8. A substrate coated with a coating composition of Claim 5.

**Patentansprüche**

1. Weiterentwickelte Epoxyharzzusammensetzung, enthaltend ein Produkt aus der Umsetzung von (A) einer Mischung enthaltend (1) mindestens ein Polyglycidylether eines Materials mit mindestens zwei aliphatischen Hydroxylgruppen pro Molekül (2) mindestens ein Epoxyharz mit im Mittel 2,6 bis 6 Glycidylethergruppen pro Molekül, die an einen oder mehrere aromatische Ringe gebunden sind, und gegebenenfalls (3) ein oder mehrere Glycidylether eines zweiwertigen Phenols mit (B) mindestens einem zweiwertigen Phenol in Gegenwart einer geeigneten Menge eines geeigneten Katalysators, und wobei

(i) Bestandteile (A) und (B) in Mengen vorhanden sind, die ein Verhältnis von Epoxy zu phenolischem Hydroxyl von 1,4:1 bis 4:1 ergeben, unter der Bedingung, daß alle Berechnungen auf der Basis erfolgen, daß keine anderen Substituenten als Wasserstoff, Hydroxyl oder Glycidylethergruppen an allen aromatischen Ringen aller Bestandteile gebunden sind, auch wenn solche Gruppen tatsächlich vorhanden sind, und wobei

(ii) die Zahl der Epoxiäquivalente, die von Bestandteil (A—3) beigetragen werden, zur Zahl der Epoxiäquivalente, die von Bestandteil (A—2) beigetragen werden, zur Zahl der Epoxiäquivalente, die von Bestandteil (A—1) beigetragen werden, von 0:0,05:1 bis 0,3:0,6:1 beträgt.

2. Weiterentwickelte Epoxyharzzusammensetzung nach Anspruch 1, dadurch gekennzeichnet, daß (i) wenn Bestandteil (A—2) eine mittlere Epoxyfunktionalität von 2,6 bis 3 aufweist, das Verhältnis der Epoxiäquivalente, die von Bestandteil (A—3) beigetragen werden, zu Epoxyäquivalenten, die von Bestandteil (A—2) beigetragen werden, zu Epoxiäquivalenten, die von Bestandteil (A—1) beigetragen werden, von 0:0,2:1 bis 0,3:0,45:1 beträgt und das Verhältnis von Gesamtepoxiäquivalenten, die von Bestandteil (A) beigetragen werden, zu phenolischen Hydroxyläquivalenten, die von Bestandteil (B) beigetragen werden, von 1,4:1 bis 4:1 beträgt,

(ii) wenn Bestandteil (A—2) eine mittlere Epoxyfunktionalität von >3 bis 3,6 aufweist, das Verhältnis der Epoxiäquivalente, die von Bestandteil (A—3) beigetragen werden, zu Epoxiäquivalenten, die von Bestandteil (A—2) beigetragen werden, zu Epoxiäquivalenten, die von Bestandteil (A—1) beigetragen werden, von 0:0,12:1 bis 0,3:0,31:1 beträgt, und das Verhältnis von Gesamtepoxiäquivalenten, die von Bestandteil (A) beigetragen werden, zu phenolischen Hydroxyläquivalenten, die von Bestandteil (B) beigetragen werden, von 1,4:1 bis 4:1 beträgt, und

(iii) wenn Bestandteil (A—2) eine mittlere Epoxyfunktionalität von >3,6 bis 6 aufweist, das Verhältnis der Epoxiäquivalente, die von Bestandteil (A—3) beigetragen wird, zu Epoxiäquivalenten, die von Bestandteil (A—2) beigetragen werden, zu Epoxiäquivalenten, die von Bestandteil (A—1) beigetragen werden, von 0:0,05:1 bis 0,3:0,1:1 beträgt und das Verhältnis von Gesamtepoxiäquivalente, die von Bestandteil (A) beigetragen werden, zu phenolischen Hydroxyläquivalenten, die von Bestandteil (B) beigetragen werden, von 1,4:1 bis 5:1 beträgt.

3. Weiterentwickelte Epoxyharzzusammensetzung nach Anspruch 1, dadurch gekennzeichnet, daß (i) wenn Bestandteil (A—2) eine mittlere Epoxyfunktionalität von 2,6 bis 3 aufweist, das Verhältnis der Epoxiäquivalente, die von Bestandteil (A—3) beigetragen werden, zu Epoxiäquivalenten, die von Bestandteil (A—2) beigetragen werden, zu Epoxiäquivalenten, die von Bestandteil (A—1) beigetragen werden, von 0:0,3:1 bis 0,15:0,56:1 beträgt und das Verhältnis von Gesamtepoxiäquivalenten, die von Bestandteil (A) beigetragen werden, zu phenolischen Hydroxyläquivalenten, die von Bestandteil (B) beigetragen werden, von 1,59:1 bis 3:1 beträgt,

(ii) wenn Bestandteil (A—2) eine mittlere Epoxyfunktionalität von >3 bis 3,6 aufweist, das Verhältnis der Epoxiäquivalente, die von Bestandteil (A—3) beigetragen werden, zu Epoxiäquivalenten, die von Bestandteil (A—2) beigetragen werden, zu Epoxiäquivalenten, die von Bestandteil (A—1) beigetragen werden, von 0:0,2:1 bis 0,15:0,41:1 beträgt, und das Verhältnis von Gesamtepoxiäquivalenten, die von Bestandteil (A) beigetragen werden, zu phenolischen Hydroxyläquivalenten, die von Bestandteil (B) beigetragen werden, von 1,59:1 bis 3:1 beträgt, und

(iii) wenn Bestandteil (A—2) eine mittlere Epoxyfunktionalität von >3,6 bis 6 aufweist, das Verhältnis der Epoxiäquivalente, die von Bestandteil (A—3) beigetragen wird, zu Epoxiäquivalente, die von Bestandteil (A—2) beigetragen werden, zu Epoxiäquivalenten, die von Bestandteil (A—1) beigetragen werden, von 0:0,08:1 bis 0,15:0,12:1 beträgt und das Verhältnis von Gesamtepoxiäquivalenten, die von Bestandteil (A) beigetragen werden, zu phenolischen Hydroxyläquivalenten, die von Bestandteil (B) beigetragen werden, von 1,59:1 bis 4:1 beträgt.

4. Weiterentwickelte Epoxyharzzusammensetzung nach Anspruch 1, dadurch gekennzeichnet, daß (i) wenn Bestandteil (A—2) eine mittlere Epoxyfunktionalität von 2,6 bis 3 aufweist, das Verhältnis der Epoxiäquivalente, die von Bestandteil (A—3) beigetragen werden, zu Epoxiäquivalenten, die von Bestandteil (A—2) beigetragen werden, zu Epoxiäquivalenten, die von Bestandteil (A—1) beigetragen werden, von 0:0,4:1 bis 0,1:0,58:1 beträgt und das Verhältnis von Gesamtepoxiäquivalenten, die von Bestandteil (A) beigetragen werden, zu phenolischen Hydroxyläquivalenten, die von Bestandteil (B) beigetragen werden, von 1,9:1 bis 2,5:1 beträgt,

(ii) wenn Bestandteil (A—2) eine mittlere Epoxyfunktionalität von >3 bis 3,6 aufweist, das Verhältnis der Epoxiäquivalente, die von Bestandteil (A—3) beigetragen werden, zu Epoxiäquivalenten, die von Bestandteil (A—2) beigetragen werden, zu Epoxiäquivalenten, die von Bestandteil (A—1) beigetragen werden, von 0:0,3:1 bis 0,1:0,43:1 beträgt, und das Verhältnis von Gesamtepoxiäquivalenten, die von Bestandteil (A) beigetragen werden, zu phenolischen Hydroxyläquivalenten, die von Bestandteil (B) beigetragen werden, von 1,9:1 bis 2,5:1 beträgt, und

(iii) wenn Bestandteil (A—2) eine mittlere Epoxyfunktionalität von >3,6 bis 6 aufweist, das Verhältnis der Epoxiäquivalente, die von Bestandteil (A—3) beigetragen wird, zu Epoxiäquivalenten, die von Bestandteil (A—2) beigetragen werden, zu Epoxiäquivalenten, die von Bestandteil (A—1) beigetragen werden, von 0:0,1:1 bis 0,1:0,13:1 beträgt und das Verhältnis von Gesamtepoxiäquivalenten, die von Bestandteil (A) beigetragen werden, zu phenolischen Hydroxyläquivalenten, die von Bestandteil (B) beigetragen werden, von 1,9:1 bis 3:1 beträgt.

5. Beschichtungszusammensetzung enthaltend ein weiterentwickeltes Epoxyharz nach Anspruch 1 und eine härtende Menge eines oder mehrerer dafür geeigneter Härtungsmittel.

6. Zusammensetzung nach Anspruch 5, dadurch gekennzeichnet, daß das Härtungsmittel ausgewählt ist aus einem oder mehreren blockierten Polyisocyanaten oder Mischungen von einem oder mehreren blockierten Polyisocyanaten und mindestens einer Guanidinverbindung.

7. Zusammensetzung nach Anspruch 6, dadurch gekennzeichnet, daß die blockierten Polyisocyanate ausgewählt sind aus Polyisocyanaten, die mit Ketoxim blockiert sind.

8. Trägermaterial, beschichtet mit einer Beschichtungszusammensetzung nach Anspruch 5.

**Revendications**

1. Une composition de résine époxy développée, comprenant un produit résultant de la réaction de (A) un mélange contenant (1) au moins un éther polyglycidylique d'un matériau comportant au moins deux groupements aliphatiques hydroxyliques par molécule, (2) au moins une résine époxy comportant une moyenne de 2,6 à 6 groupements éther glycidylique par molécule, attachés à un plusieurs cycle(s) aromatique(s) et, facultativement, (3) un ou plusieurs éther(s) glycidylique(s) d'un diphénol, avec (B) au moins un diphénol, en présence d'une quantité adaptée d'un catalyseur adéquat, et dans laquelle (i) les composants (A) et (B) sont présents en des quantités qui fournissent un rapport époxy à hydroxyle phénolique de 1,4:1 à 4:1 avec la condition que tous les calculs sont basés sur le fait qu'il n'existe aucun groupement substituant autre qu'hydrogène, hydroxyle ou éther glycidylique attaché à un quelconque cycle aromatique de l'un quelconque des composants, même lorsque de tels groupements sont effectivement présents, et (ii) dans laquelle le nombre d'équivalents époxy fournis par le composant (A—3) au nombre d'équivalents époxy fournis par le composant (A—2) au nombre d'équivalents époxy fournis par le composant (A—1) est de 0:0,05:1 à 0,3:0,6:1.

2. Une composition de résine époxy développée selon la revendication 1, dans laquelle:

(i) lorsque le composant (A—2) a une fonctionnalité époxy moyenne de 2,6 à 3, le rapport des équivalents époxy fournis par le composant (A—3) aux équivalents époxy fournis par le composant (A—2) aux équivalents époxy fournis par le composant (A—1) est de 0:0,2:1 à 0,03:0,45:1, et le rapport des équivalents époxy totaux fournis par le composant (A) aux équivalents hydroxyle phénolique fournis par le composant (B) est de 1,4:1 à 4:1;

(ii) lorsque le composant (A—2) a une fonctionnalité époxy moyenne de >3 à 3,6, le rapport des équivalents époxy fournis par le composant (A—3) aux équivalents époxy fournis par le composant (A—2) aux équivalents époxy fournis par le composant (A—1) est de 0:0,12:1 à 0,3:0,31:1, et le rapport des équivalents époxy totaux fournis par le composant (A) aux équivalents hydroxyle phénolique fournis par le composant (B) est de 1,4:1 à 4:1; et

(iii) lorsque le composant (A—2) a une fonctionnalité époxy moyenne de >3,6 à 6, le rapport des équivalents époxy fournis par le composant (A—3) aux équivalents époxy fournis par le composant (A—2) aux équivalents époxy fournis par le composant (A—1) est de 0:0,05:1 à 0,3:0,1:1, et le rapport des équivalents époxy totaux fournis par le composant (A) aux équivalents hydroxyle phénolique fournis par le composant (B) est de 1,4:1 à 5:1.

3. Une composition de résine époxy développée selon la revendication 1, dans laquelle:

(i) lorsque le composant (A—2) a une fonctionnalité époxy moyenne de 2,6 à 3, le rapport des équivalents époxy fournis par le composant (A—3) aux équivalents époxy fournis par le composant (A—2) aux équivalents époxy fournis par le composant (A—1) est de 0:0,3:1 à 0,15:0,56:1, et le rapport des équivalents époxy totaux fournis par le composant (A) aux équivalents hydroxyle phénolique fournis par le composant (B) est de 1,59:1 à 3:1;

(ii) lorsque le composant (A—2) a une fonctionnalité époxy moyenne de >3 à 3,6, le rapport des équivalents époxy fournis par le composant (A—3) aux équivalents époxy fournis par le composant (A—2) aux équivalents époxy fournis par le composant (A—1) est de 0:0,2:1 à 0,15:0,41:1, et le rapport des équivalents époxy totaux fournis par le composant (A) aux équivalents hydroxyle phénolique fournis par le composant (B) est de 1,59:1 à 3:1; et

(iii) lorsque le composant (A—2) a une fonctionnalité époxy moyenne de >3,6 à 6, le rapport des équivalents époxy fournis par le composant (A—3) aux équivalents époxy fournis par le composant (A—2)

aux équivalents époxy fournis par le composant (A—1) est de 0:0,08:1 à 0,15:0,12:1, et le rapport des équivalents époxy totaux fournis par le composant (A) aux équivalents hydroxyle phénolique fournis par le composant (B) est de 1,59:1 à 4:1.

4. Une composition de résine époxy développée selon la revendication 1, dans laquelle:

(i) lorsque le composant (A—2) a une fonctionnalité époxy moyenne de 2,6 à 3, le rapport des équivalents époxy fournis par le composant (A—3) aux équivalents époxy fournis par le composant (A—2) aux équivalents époxy fournis par le composant (A—1) est de 0:0,4:1 à 0,1:0,58:1, et le rapport des équivalents époxy totaux fournis par le composant (A) aux équivalents hydroxyle phénolique fournis par le composant (B) est de 1,9:1 à 2,5:1;

(ii) lorsque le composant (A—2) a une fonctionnalité époxy moyenne de >3 à 3,6, le rapport des équivalents époxy fournis par le composant (A—3) aux équivalents époxy fournis par le composant (A—2) aux équivalents époxy fournis par le composant (A—1) est de 0:0,3:1 à 0,1:0,43:1, et le rapport des équivalents époxy totaux fournis par le composant (A) aux équivalents hydroxyle phénolique fournis par le composant (B) est de 1,9:1 à 2,5:1; et

(iii) lorsque le composant (A—2) a une fonctionnalité époxy moyenne de >3,6 à 6, le rapport des équivalents époxy fournis par le composant (A—3) aux équivalents époxy fournis par le composant (A—2) aux équivalents époxy fournis par le composant (A—1) est de 0:0,1:1 à 0,1:0,13:1, et le rapport des équivalents époxy totaux fournis par le composant (A) aux équivalents hydroxyle phénolique fournis par le composant (B) est de 1,9:1 à 3:1.

5. Une composition de revêtement comprenant une résine époxy développée selon la revendication 1 et une quantité durcissante d'un ou plusieurs agent(s) durcissant(s) pour ladite résine.

6. La composition de la revendication 5, dans laquelle ledit agent durcissant est choisi parmi un ou plusieurs polyisocyanate(s) bloque(s) ou des mélanges d'un ou plusieurs polyisocyanate(s) bloque(s), et d'au moins un matériau guanidine.

7. La composition de la revendication 6, dans laquelle lesdits polyisocyanates bloqués sont choisis parmi des polyisocyanates bloqués par une cétoxime.

8. Un substrat revêtu d'une composition de revêtement selon la revendication 5.